# EUROPEAN PATENT APPLICATION

(11) **EP 2 377 595 A1**
(43) Date of publication of application: **19.10.2011**
(21) Application number: 10731017.9
(22) Date of filing: 06.01.2010
(51) Int. Cl.: B01D 53/00

(54) **CONTROLLING ENVIRONMENTAL POLLUTION WITH THE USE OF VARIABLE AQUEOUS SOLUTIONS**

(30) Priority: 13.01.2009 CL 512009
(71) Applicant: Ingenenieria E Innovaciones Tecnologicas, Innovatec Ltda, Santa Rosa de Chena / Padre Hurtado (CL)
(72) Inventor: VIDAL FERNANDEZ, Rafael, Emiliano, Código Postal 8320069 (CL)
(74) Representative: Richter, Werdermann, Gerbaulet & Hofmann
(86) International application number: PCT/CL2010/000001
(87) International publication number: WO 2010/081248

(57) **Abstract**

A mixture or composition to form a variable chemical solution or an aqueous substance and process of application, which permits the control of environmental pollution caused mainly by smoke-stack industries and by the increase of internal combustion vehicles, **characterized** because the mixture or composition consists of: sodium bicarbonate between 0.1% and 98%, preferably between 2% and 30%; a urea between 1% and 98%, preferably between 1% and 63%; and distilled or carbonated water between 20% and 95%, preferably between 10% and 70%.

## Description

### Antecedents of the Invention

This invention is related to a composition or mixture to form a variable chemical solution or watery liquid substance and its process of application, that permits the controlling of environmental pollution caused mainly by smoke-stack industries, the increase of internal combustion vehicles that, together, eject large amounts of carbon monoxide, smoke, dust, fatty gases, acid gases, suspended particles, etc., that accumulate as contaminating waste or residues in the space we inhabit and in the air we breathe.

At present there is no chemical solution or substance that will permit an effective control of pollution, there are only devices that are capable of controlling part of the contaminants. These are the Catalytic Converters, devices that work producing an oxidation of some components of the gas outflow that cross it, transforming some gases that are highly lethal for human beings, such as CO into another friendlier chemical element, CO₂. Nevertheless, this element is the principal originator of the greenhouse effect that the planet is being subjected to at this time.

In this respect, other systems or means have been devised to avoid environmental pollution. These are systems or means that use water as a chemical solution to retain gases and particles, which to date has not shown results. This is why a variable chemical solution has been created that will make it possible to avoid the formation of gases in the combustion and at the same time retain the heavy particles, something that the devices used at present cannot do.

The chemical composition of the invention is applicable to the mechanical device mentioned in Patent Applications CL N° 1930-2001 and 2.146-2000 (of the same applicant). With reference to the application and to the substance of the Urea, Sodium Bicarbonate and distilled or demineralized water, the percentages of urea and bicarbonate are variable depending strictly on the chemical composition of the gases that come out of the industrial chimneys. For example, if the effluent is rich in SOx, this entails a greater concentration of sodium bicarbonate to neutralize it; if the emissions are rich in NOx, the content of urea in the composition must be increased. This mixture must be equivalent to a mixture in harmony with the stoichiometry of the composition of the gases of the chimney. Nevertheless, when worked out in practice, a composition at least 60% richer than the stoichiometric mixture needs to be maintained to achieve the best result and each chimney is a particular case because the composition of the gases varies depending on the chemical composition of the fuel and the temperature at which the combustion occurs. Depending on the volume of gases to be treated and, therefore, the size of the chimneys, an attached pumping system may be installed for apportioning the solution that restores part of the reagents that have taken part in the chemical reaction so as to maintain a constant equilibrium of the reagents in the unit.

The problem of climate change is a very serious dilemma for the planet. So far, not everybody has been able to measure it. In the year 1900 the concentration of Carbon Dioxide was 285 ppm; in the year 2000 the concentration reached 375 ppm. This explosive growth of the concentration of this gas in the atmosphere is causing an alteration of the planet's average temperature. At present, it is estimated that the temperature has risen 0.8 °C in the last 100 years and the forecasts estimate that if the concentration continues increasing at the same rate it has had to date, the planet's average temperature will rise 4.5 °C towards the end of 2100. The consequences are impossible to measure. To date there has been an increase in the number of hurricanes, typhoons, floods caused by torrential rains and agricultural land that has been devastated by rains that erode the land. All this is caused by the climate change and one of the principal causes of this change is Carbon Dioxide.

Everybody is aware of the serious problem that affects the planet, produced mainly by emissions of greenhouse gases. People are also aware of the damages caused to the health of human beings, and to the flora and fauna, by the emissions of the gases produced by combustion, what is known as smog, and which mainly affects the more inhabited regions and cities.

Based on this problem, that affects humanity as a whole, and after years of research, I have finally established a composition to make up an aqueous solution whereby the gases resulting from the combustion of Diesel petroleum can be reduced and/or lowered, transformed into other products, less noxious or absolutely controlled.

The application of the chemical composition, with which the combustion gases can be lowered, is based on precipitating them by means of a shower, but a shower with the aqueous solution of the invention that permits the interaction of the gases with the components and salts that form it, achieving a reduction of the amount of gases that go out into the atmosphere, in very varied percentages and that depends mainly on the time of interaction of these gases with the shower, the chemical composition of the shower, the temperature and the physical system that contains the liquid that will interact.

The composition or aqueous solution is based mainly on the action of the mixtures of salts that are dissolved in water. The first of these salts is Sodium Bicarbonate and the second is Urea. The proportions of these salts in the aqueous solution fluctuate between 01% and 98%; preferably between 30% and 95% over the stoichiometric reaction resulting between the equation of the fuel and the salts, that is, the mixture must be enriched to achieve a greater interaction.

With regard to the gas retention process, by using the composition of the invention, the gases washed with said composition are taken to a second stage where they are made to pass through a container loaded with zeolite. This compound, that corresponds to an aluminum silicate, because of its adsorbing characteristics, will reduce the compounds of heavy metals transported in the post-combustion flow of gases. Once the gases have crossed this barrier they must pass through a third stage, a fiber made up of a polymeric hydrocarbon, an oleophilic and waterproof element whose principal characteristic will be that of retaining the finer particles and the carbon resulting from the process that is obtained by chemical reaction with the compounds resulting from the first process.

The results tested in the laboratory indicate that we managed to reduce the total amount of the noxious gases of the combustion process including the Carbon Dioxide and releasing a larger amount of Oxygen (O₂) into the atmosphere than the flow of the combustion process.

Three separate containers or a single one made up of three chambers are all that is needed to carry out the process. A series of elements such as sleeve filters, centrifugal separators, coolers, etc., may be added with the sole purpose of improving the capacity or the quality of the system with regard to its application, whether it is mobile or stationary, industrial or vehicular.

The physical container will vary with regard to shape and size, depending on the type of gases, the source that produces them and their temperature, and the physical space available in the vehicle for its installation.

The most important thing to take into consideration when a system is being developed for mounting in a vehicle is related to the physical space available to achieve the interaction of the molecules of the gases with the molecules of the solution. Also important is the size of the drop in the shower; the finer it is, the greater the interaction.

With regard to substances or compositions to eliminate environmental pollution in general, in the state-of-the-art we can quote patent ES N° 2.137.563. The invention refers to a decontaminating aqueous composition, method of preparation and its conditions. Said composition is characterized in that it contains H₂O₂ and a component of silver in an acid medium, which includes:
(a) An amount lower than or equal to 60% in weight of H₂O₂ in relation to the total weight of said composition;
(b) A mixture RCO3H-RCO2H where R is methyl or ethyl, intervening said mixture in such an amount that the gravimetric ratio of said mixture with regard to the hydrogen peroxide is comprised between 0.15/1 and 0.85/1;
(c) A component of silver, as a source of Ag+ ions, chosen between the set made up of the salts and silver complexes, with the silver component intervening in such an amount that the gravimetric ratio of said silver component with regard to the hydrogen peroxide is comprised between 0.0005/1 and 0.015/1;
(d) A stabilizing agent intervening in such an amount that the gravimetric ratio of said stabilizing agent with regard to the hydrogen peroxide is comprised between 0.0005/1 and 0.025/1, water in addition up to 100% in weight.

**TABLE OF SOME EXAMPLES OF THE EXECUTION FOR THE MIXTURE OR COMPOSITION FOR AQUEOUS SOLUTION (% in weight)**

| Element | Ex. 1 | Ex. 2 | Ex. 3 | Ex. 4 | Ex. 5 | Ex. 6 | Ex. 7 |
|---|---|---|---|---|---|---|---|
| Sodium Bicarbonate NaHCO₃. | 10% | 30% | 25% | 8% | 5% | 15% | 20% |
| Urea CO(NH₂)₂. | 50% | 65% | 55% | 60% | 8% | 37% | 38% |
| Distilled water H₂O | 40% | 15% | 20% | 32% | 87% | 48% | 42% |

### Description of the Invention

This invention is related to a mixture or composition to make up a variable chemical solution or an aqueous substance and its process of application, which permits the control of environmental pollution caused mainly by the smoke-stack industries, by the increase of internal combustion vehicles, whose composition consists of:
- Sodium Bicarbonate between 0.1% to 98%, preferably between 2% and 30%;
- A Urea between 1% to 98%, preferably between 1% and 63%; and
- Distilled or carbonated water between 20% to 95%, preferably between 10% and 70%.

To carry out the use of the composition of this invention, any gas washing and filtering device may be used as use in a mechanical element; it is here that the reaction physically takes place, producing the chemical reaction on the gases that originate in the combustion of fossil fuels, petroleum and its byproducts, reducing the emissions of the noxious gases into the surrounding troposphere and also producing positive effects on the amount issued of another two of them, the reduction of the Carbon Dioxide and the increase in the amount of Oxygen released.

The gases originating from the combustion are "washed" in a solution made up of distilled water to which Sodium Bicarbonate and Urea have been added, both produced in a concentration that fluctuates between 5% and 8% of each one of them in volume. The concentration is variable and depends largely on the content of sulfur that the fuel contains. Subsequently the outflow of gasses must cross a filter element made of a pound of Polymeric Hydrocarbon.

This process is only possible through the sum of all the components, which set in motion a chain of events in which each one of the gases resulting from the combustion undergoes different processes that permit the absorption of part of the contaminants transforming them into other products that are useful to man and thus achieving the transformation of part of the NOx, generating atmospheric N₂, an element that is absolutely neutral for man and the environment that surrounds him. In the process we also achieve the transformation of the CO and the CO₂, obtaining as a resulting product a gas outflow with a smaller percentage of these gases and a higher level of Oxygen - O₂.

The process described in this document has been tested in the laboratory; therefore I can confirm that the process effectively reduces the noxious emanations and the particulate material in ranges close to 80% of the original gas outflow that leaves the motor after the combustion. This amount is not exact as it depends directly on the power of the motor, work load and revolutions, that is, it depends directly on the amount of gases to be treated and the size of the device in which the process takes place.

## Claims

1. A mixture or composition to form a variable chemical or an aqueous substance and process of application, that permits the control of environmental pollution caused mainly by smoke-stack industries and the increase of internal combustion vehicles, **CHARACTERIZED in that** the mixture or composition consists of: sodium bicarbonate between 0.1% to 98%, preferably between 2% and 30%; a urea between 1% and 98%, preferably between 1% and 63%; and distilled or carbonated water between 20% and 95%, preferably between 10% and 70%.

2. A mixture or composition to form a variable chemical solution or an aqueous substance, in accordance with claim 1, **CHARACTERIZED in that** the proportions of these salts in the aqueous solution fluctuate preferably between 30% and 95% over the stoichiometric reaction resulting between the equation of the fuel and the salts, that is, the mixture must be enriched to achieve a greater interaction.

3. A mixture or composition to form a variable chemical solution or an aqueous substance, in accordance with claim 1, **CHARACTERIZED in that** the process for applying the mixture of the composition for the process of washing the gases or retention, in a first stage the gases are washed with said composition and are then taken to a second stage in which they are made to pass through a container loaded with zeolite, a compound that corresponds to an aluminum silicate, because of its adsorbent properties, will reduce the compounds of heavy metals that the flow of post-combustion gases drags along, once the gases have crossed this barrier, in a third stage, they must cross a fiber made up of a polymeric hydrocarbon, an oleophilic or waterproof element whose principal function is the retaining of the finer particles and the carbon resulting from the process that is obtained by a chemical reaction with the compounds resulting from the first stage.

## Amended claims

### Amended claims under Art. 19.1 PCT

**1.** A mixture or composition to form a variable chemical or an aqueous substance and process of application, that permits the control of environmental pollution caused mainly by smoke-stack industries and the increase of internal combustion vehicles, **CHARACTERIZED in that** the mixture or composition consists of: sodium bicarbonate between 0.1% to 4.8%, preferably between 2% and 3%; a urea between 1% and 4.8%, preferably between 9% and 18.5%; and distilled or carbonated water between 20% and 95%, preferably between 10% and 70%.

**2.** A mixture or composition to form a variable chemical solution or an aqueous substance, in accordance with claim 1, **CHARACTERIZED in that** the proportions of these salts in the aqueous solution fluctuate preferably between 30% and 95% over the stoichiometric reaction resulting between the equation of the fuel and the salts, that is, the mixture must be enriched to achieve
